# EUROPEAN PATENT APPLICATION

(11) **EP 4 523 872 A1**
(43) Date of publication of application: **19.03.2025**
(21) Application number: 23197296.9
(22) Date of filing: 14.09.2023
(51) Int. Cl.: B27C 5/10

(54) **A POWER TOOL**

(71) Applicant: Black & Decker, Inc., New Britain, CT 06053 (US)
(72) Inventor: RAAB, Timo, Idstein (DE); RAJENDRAN, Ashwin, Idstein (DE); LAUER, Arthur, Frankfurt am Main (DE); ARICH, Klaus-Dieter, Hünstetten-Beuerbach (DE)
(74) Representative: SBD IPAdmin

(57) **Abstract**

The power tool comprises a housing, a motor mounted in the housing and operatively connected to a tool holder arranged to hold a cutting tool bit, at least one guide post slidably mounted to the housing such that the housing is moveable between a retracted position and a plunged position, a base portion fixed to the at least one guide post, and a height adjustment mechanism. The height adjustment mechanism includes a threaded sleeve fixed with respect to one of the at least one guide post or the housing and an adjustment sleeve threadedly engaged with the threaded sleeve. The adjustment sleeve comprises a housing stop portion configured to engage the other of the housing or the at least one guide post in the retracted position. Movement of the adjustment sleeve with respect to the threaded sleeve is configured to adjust the distance between the housing and the base portion when the housing is in the retracted position.

## Description

### Field

The present disclosure relates to a power tool. In particular, the present disclosure relates to routers.

### Background

A power tool such as a router may be utilized by tradesmen, craftsmen, hobbyists and other users to perform various tasks. For instance, a router may be used to perform intricate cutting projects, such as decorative profiles and trimming laminates on the edges or perimeters of a workpiece. A router also may be utilized to form grooved areas in woodworking and other material as well as to remove excess material on workpieces. Routers may utilize various types of cutting tools or router bits in order to perform these and other types of tasks.

One type of router is a plunge router whereby the user can move the housing and the cutting tool towards the base. It is known to adjust the height of the housing above the base. This may be useful for the user to adjust the depth of cut and / or the amount of travel which is needed when plunging the router into the workpiece. One such adjustment mechanism is shown in US 10,195,760. A problem with this arrangement is that the user must use two hands to make a fine adjustment of the height of the housing above the base. Furthermore, the adjustment mechanism is bulky increasing the overall size of the router.

### Summary

Examples of the present disclosure aim to address the aforementioned problems.

According to an aspect of the present disclosure there is a power tool comprising a housing, a motor mounted in the housing and operatively connected to a tool holder arranged to hold a cutting tool bit, at least one guide post slidably mounted to the housing such that the housing is moveable between a retracted position and a plunged position, a base portion fixed to the at least one guide post, and a height adjustment mechanism comprising a threaded sleeve fixed with respect to one of the at least one guide post or the housing and an adjustment sleeve threadedly engaged with the threaded sleeve wherein the adjustment sleeve comprises a housing stop portion configured to engage the other of the housing or the at least one guide post in the retracted position. Movement of the adjustment sleeve with respect to the threaded sleeve is configured to adjust the distance between the housing and the base portion when the housing is in the retracted position. This aspect provides the advantage of precise height adjustment for the power tool, allowing for accurate and consistent cutting depths.

Optionally in some examples, the power tool comprises a housing return spring configured to bias the housing towards the retracted position. This provides the advantage of automatically returning the housing to the retracted position, making it easier for the user to reset the tool for the next cut.

Optionally in some examples, a first spring end of the housing return spring is fixed with respect to the threaded sleeve and a second spring end of the housing return spring is fixed with respect to the housing. This configuration provides the advantage of a stable and secure connection for the housing return spring, ensuring consistent performance.

Optionally in some examples, the housing return spring is mounted between the threaded sleeve and the at least one guide post. This provides the advantage of a compact design, saving space within the power tool.

Optionally in some examples, the first spring end is mounted between a protruding inner annular wall and an outer wall of the threaded sleeve. This provides the advantage of a secure mounting point for the housing return spring, ensuring consistent performance.

Optionally in some examples, the second spring end is mounted in an annular recess in the housing. This provides the advantage of a secure mounting point for the housing return spring, ensuring consistent performance.

Optionally in some examples, the guide post comprises a guide post conduit and is in fluid communication with a dust extraction conduit. This provides the advantage of efficient dust extraction during operation, keeping the work area clean and improving visibility for the user.

Optionally in some examples, the threaded sleeve is mounted to the dust extraction conduit. This provides the advantage of a compact design, saving space within the power tool.

Optionally in some examples, the at least one guide post, the threaded sleeve, and the adjustment sleeve are coaxially aligned. This provides the advantage of a streamlined design, reducing the overall size and weight of the power tool.

Optionally in some examples, the adjustment sleeve comprises a depth gauge. This provides the advantage of allowing the user to easily and accurately set the desired cutting depth.

Optionally in some examples, the router comprises a plunge depth stop mounted to the base and a plunge depth rod mounted to the housing wherein the plunge depth stop and the plunge depth rod are configured to engage each other when the housing is in the plunge position. This provides the advantage of a precise and consistent plunge depth during operation.

Optionally in some examples, the plunge depth stop and/or the plunge depth rod are configured to be adjustable and adjust the distance between the housing and the base when the housing is in the plunge position. This provides the advantage of allowing the user to easily and accurately set the desired plunge depth.

Optionally in some examples, the housing stop portion comprises a recessed lip at an end of the adjustment sleeve. This provides the advantage of a secure engagement between the housing stop portion and the housing or guide post, ensuring consistent performance.

Optionally in some examples, the recessed lip is configured to engage a reciprocal projection mounted on the housing. This provides the advantage of a secure engagement between the housing stop portion and the housing, ensuring consistent performance.

Optionally in some examples, the power tool is a router, a plunge router, a plunge saw, a drill, a multitool, or an oscillating tool.

### Brief Description of the Drawings

Various other aspects and further examples are also described in the following detailed description and in the attached claims with reference to the accompanying drawings, in which:
Figure 1 shows a front view of a power tool according to an example;
Figure 2 shows a side cross-sectional view of a power tool according to an example;
Figure 3 shows plan view of a power tool according to an example;
Figure 4 shows a side view of a power tool according to an example;
Figure 5 shows an exploded perspective view of a power tool according to an example;
Figures 6 and 7 shows a close-up view of a power tool according to an example;
Figures 8 and 9 show cross-sectional view of part of a power tool according to an example; and
Figure 10 shows a close-up front view of a power tool according to an example.

### Detailed Description

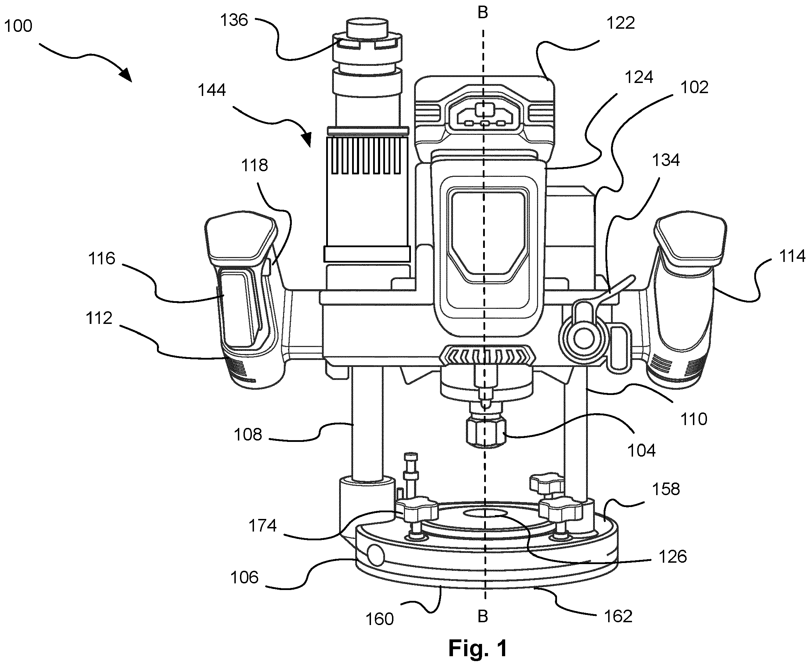

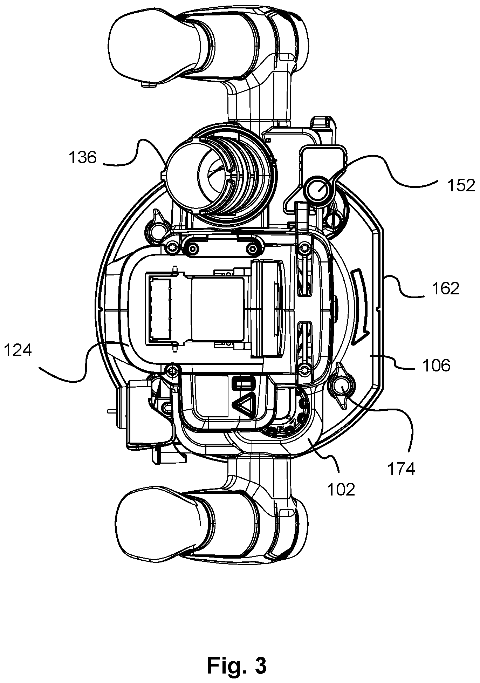

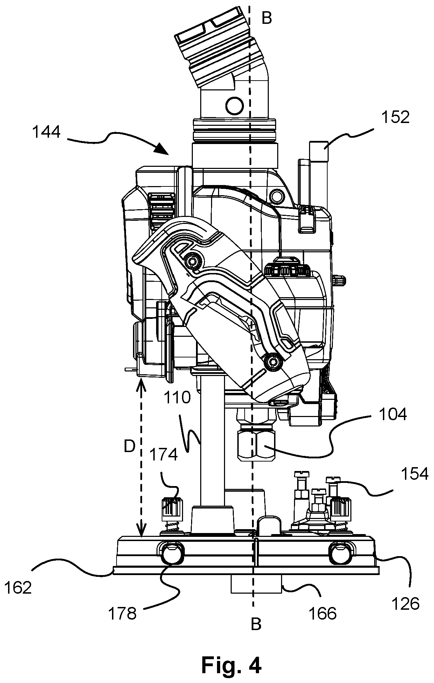

Figure 1 shows a front view of a power tool 100 according to an example. Figures 3, and 4 also respectively show a plan view, and a side view of the same power tool 100. The power tool 100 as shown in Figure 1 is a router 100, but in other examples any other type of power tool can be used such as a plunge saw, a drill, a multitool, or an oscillating tool mounted on a plunge base portion 106. Hereinafter, the term power tool 100 will be used to describe the examples.

The power tool 100 comprises a housing 102. The housing 102 comprises a clam shell type construction having two halves which are fastened together. The halves of the housing 102 are fastened together with screws but in alternative examples any suitable means for fastening the housing 102 together may be used such as glue, clips, bolts and so on. For the purposes of clarity, the fastenings in the housing 102 are not shown.

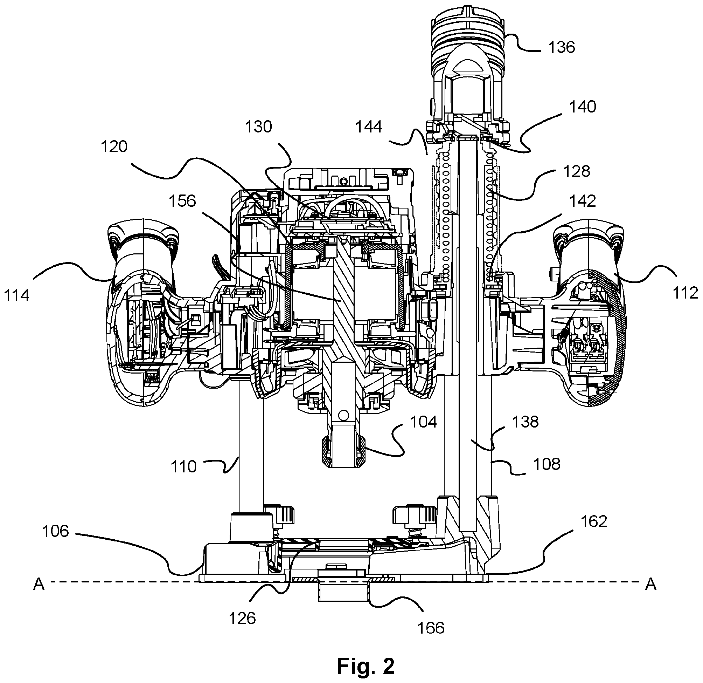

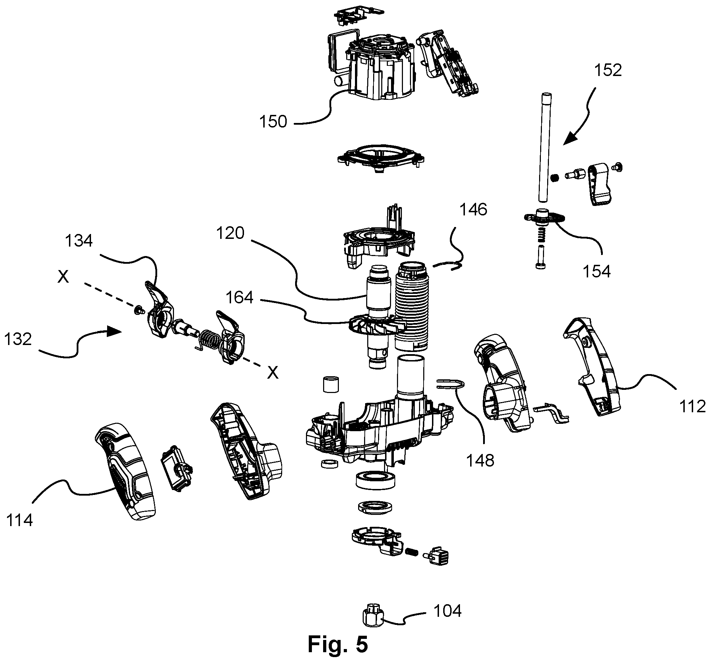

A motor 120 (best shown in Figure 2) is mounted in the housing 102 for driving a collet 104. Figure 2 shows a cross-sectional view of the power tool 100. The motor 120 is optionally mounted within a motor housing 150 (best shown in Figure 5). Figure 5 shows an exploded view of the power tool 100. The motor housing 150 may be mounted to the housing 102. The motor 120 may be any suitable type of electric motor, such as a brushed or brushless DC motor, an AC motor, a stepper motor, or other types of motors known in the art. Optionally, the motor housing 150 is mounted to the housing 102 via dampeners e.g. rubber mounts (not shown) to reduce the vibration transmitted from the motor 120 to the housing 102 and, in turn, to the user.

The motor 120 is operatively connected to the collet 104 through a drive shaft 156, which transmits the rotational movement of the motor 120 directly to the tool holder e.g., the collet 104. The drive shaft 156 may comprise one or more bearings to decrease friction and ensure smooth rotation of the collet 104.

The motor 120 may comprise various cooling components, such as fans or cooling fins, to dissipate heat generated during operation. One such fan 164 is shown in Figure 5. These cooling components may be encased within the motor housing 150 or the housing 102 of the power tool 100 and may be integrated into the design of the motor 120 itself.

A cutting tool bit (not shown) can be mounted in the collet 104 for engaging a workpiece (not shown). Typically, the cutting tool is a cutting tool bit for a power tool 100. In some examples the cutting tool bit is a router bit such as an upcut spiral router bit, a downcut spiral router bit, a straight router bit, a cove router bit, a chamfer router bit, a rabbeting router bit, a roundover router bit, a beading router bit, an ogee router bit or a panel raising router bit. Any other suitable router cutting tool bit can be mounted in the collet 104.

The collet 104 may be a cylindrical component that contains an inner bore to accommodate and grip the shank of the cutting tool bit. The collet 104 is known and will not be discussed in any further detail.

As shown in Figure 1, the power tool 100 comprises a base portion 106 for engaging the workpiece. The base portion 106 comprises a base aperture 126 through which the cutting tool bit can project e.g., when the user plunges the housing 102 towards the base portion 106 and then the cutting tool bit projects through the base aperture 126. The base portion 106 is mounted to the housing 102 via first and second guide posts 108, 110. The first and second guide posts 108, 110 are slidably mounted to the housing 102 for adjusting the relative distance of the base portion 106 from the collet 104. In some examples, the first and second guide posts 108, 110 are removable. This means that the power tool 100 can be used without the base portion 106 engaging the workpiece.

The housing 102 comprises a first handle 112 and a second handle 114 for the user to grip during operation. The first handle 112 comprises a main trigger switch 116 for operating the power tool 100. In some examples, the first handle 112 also comprises a lock button 118 for selectively locking the main trigger switch 116 into an "ON" status. This means that the user does not have to constantly keep pressure maintained on the main trigger switch 116 during operation of the power tool 100. In some examples, the main trigger switch 116 can be replaced with a momentary switch (not shown).

The user can hold both the first handle 112 and the second handle 114 to grip the power tool 100 during operation thereof. The first handle 112 and the second handle 114 optionally comprise a clam shell arrangement as shown in Figure 5.

The motor 120 is electrically connected to an electric power source 122. In some examples, the electric power source 122 is a mains electrical supply. In some other examples, the electrical power source 122 is a battery 122. The battery 122 can be removably mountable to the housing 102 or integral to the housing 102. In some examples, the power tool 100 can be powered either from both a battery 122 and / or a mains electrical supply. The motor 120 is connected to a controller 130 (best shown in Figure 2) mounted on a PCB in the housing 102. The controller 130 is configured to issue control instructions to the motor 120 in dependence of the user actuating the main trigger switch 116.

The battery 122 as shown in Figure 1 is securely mounted to a top portion 124 of the housing 102. The battery 122 is configured to power the motor 120 and other electronic components. The battery 122 may comprise lithium-ion cells, nickel-metal hydride cells, or any other type of rechargeable or non-rechargeable power source.

The power tool 100 as shown in Figure 1 is optionally a plunge router 100. However, in some examples, the power tool 100 is not a plunge router 100. Accordingly, the power tool 100 can be selectively operated in different modes. In a first mode, the power tool 100 is in a locked position. In the locked position, the first and second guide posts 108, 110 are fixed with respect to the housing 102. This means that the housing 102 and the collet 104 are fixed with respect to the base portion 106. Accordingly, the cutting tool (not shown) can be maintained at a set height above the workpiece. This means that the user of the power tool 100 can select how far the cutting tool projects through the aperture in the base portion 106.

In a second mode, the power tool 100 is in an unlocked position. In the unlocked position the first and second guide posts 108, 110 are slidable with respect to the housing 102. This means that the user can push down on the first and second handles 112, 114 and the first and second guide posts 108, 110 slide into or through the housing 102. In this way, the distance between the base portion 106 and the housing 102 can be adjusted. This means that the user can position the power tool 100 above the workpiece and then push the housing 102 towards the workpiece and the cutting tool plunges into the workpiece. Accordingly, when the power tool 100 is in the unlocked position, the housing 102 is moveable between a retracted position (e.g. as shown in Figure 1) and a plunged position. In the plunged position, the housing 102 has moved with respect to the first and second guide posts 108, 110. That is, the housing 102 has slid along the first and second guide posts 108, 110 from the retracted position to the plunged position.

As discussed hereinafter, the power tool 100 is configured to be set in a plurality of unlocked positions for different operation modes of the power tool 100.

The user can select between the locked and unlocked position of the power tool 100 by using a locking system 132 (best shown in Figure 5) mounted on the power tool 100. In some examples, the locking system 132 is actuatable with a locking lever 134.

Figure 1 shows the locking lever 134 in a locked position. In some examples, the locking lever 134 is in the locked position in a vertical orientation. The locking lever 134 is mechanically coupled to the first and / or second guide posts 108, 110 such that relative movement of the first and second guide posts 108, 110 is prevented when the locking lever 134 is in the locked position.

In some examples, the locking lever 134 actuates a locking bolt (not shown) to engage the first guide post 108 or the second guide post 110. In this way, the locking bolt exerts a frictional force against the first or second guide posts 108, 110 when the locking lever 134 is in the locked position. Alternatively, the locking bolt can engage a detent or a hole in the first guide post 108 or the second guide post 110.

Accordingly, when the locking lever 134 is in the locked position the locking bolt clamps against or engages the first or second guide posts 108, 110 preventing relative movement therebetween. In some examples the locking lever 134 optionally engages a reciprocal hole or detent (not shown) in the second guide post 110 and the housing 102. In other examples, an additional second locking bolt (not shown) is used to also engage with the first guide post 108 such that both the first and the second guide posts 108, 110 are locked at the same time. In other examples, other mechanisms can be used to lock the first and second guide posts 108, 110 such as a latch-catch mechanism, a ball bearing engaging a detent in the first and second guide posts 108, 110 or any other suitable mechanism.

The locking lever 134 is moveable between the locked position shown in Figure 1 and an unlocked position (not shown). In some examples, the locking lever 134 is rotatable between the locked position and the unlocked position about a rotational axis X-X of the locking lever 134 (as shown in Figure 5). In some other examples, the locking lever 134 is slidable between the locked position and the first and second unlocked positions. Mechanical linkages (not shown) may be coupled between the locking lever 134 and the locking bolt for actuating engagement between the locking bolt and the first and second guide posts 108, 110.

When the user plunges the housing 102 towards the base portion 106 (e.g. moves the housing 102 into the plunged position), the collet 104 and the cutting tool project through the base aperture 126. A housing return spring 128 is optionally shown in Figure 2 as is fixed with respect to the first guide post 108 at a first spring end 140 and connected to the housing 102 at a second spring end 142. In some examples the housing return spring 128 is fixed with respect to the first guide post 108 at a first spring end 140 with a first C-clip 146 and fixed with respect to the housing 102 at a second spring end 142 with a second C-clip 148. Other types of fasteners can be used instead of the first and second c-clips 146, 148. Accordingly, when the housing 102 is moved towards, the base portion 106, the housing return spring 128 extends and exerts a return force on the housing 102 to return the unplunged position (e.g., the retracted position of power tool 100 as shown in Figure 1).

In order to adjust the depth of the plunge e.g., how far the collet 104 projects through the base aperture 126, the housing 102 comprises a depth rod 152. The depth rod 152 is configured to engage one or more depth screws 154 of a plunge depth stop mounted on the base portion 106. When the housing 102 is plunged towards the base portion 106, the housing 102 is prevented from moving further towards the base portion 106 when the depth rod 152 engages the depth screws 154 of the plunge depth stop. The amount the depth rod 152 extends towards the base portion 106 is adjustable by the user. Furthermore, the amount the depth screws 154 project towards the housing 102 from the base portion 106 are also adjustable by the user. For the purposes of clarity only one of the depth screws 154 are labelled. The plunge depth stop, the depth screws 154 and the depth rod 152 are known and will not be described in any further detail.

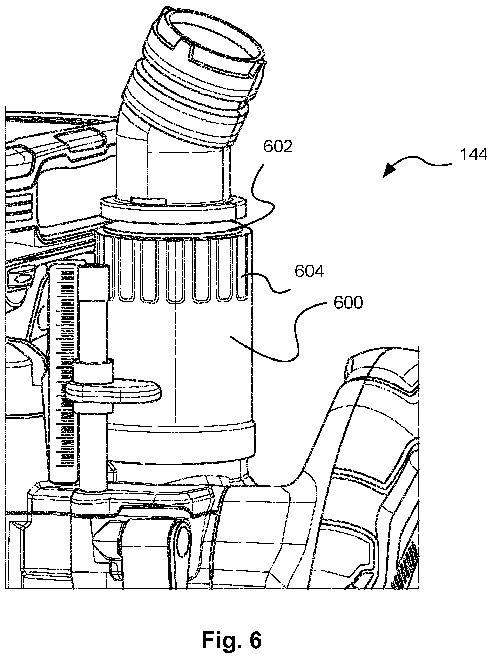

The power tool 100 further comprises a height adjustment mechanism 144 as shown in Figure 1. The height adjustment mechanism 114 will be described in more detail below with reference to Figures 6 to 9.

Turning back to Figure 1, the power tool 100 comprises a dust extraction conduit 136. The dust extraction conduit 136 is connectable to a vacuum source such as a workshop vacuum. The first guide post 108 is hollow and comprises a first guide post conduit 138 which is in fluid communication with the dust extraction conduit 136 at a first end of the first guide post 108. The second end of the first guide post 108 is in fluid communication with the base portion 106 and the cutting tool. In this way, the first guide post conduit 138 couples the vacuum source via the dust extraction conduit 136 to the base portion 106. This means cutting chips and other debris from the workpiece can be collected and extracted during operation. A chip collector accessory 300 is optionally removably mountable to the base portion 106 or the sub-base adapter 162. The chip collector accessory 300 is mountable to the base portion 106 around the base aperture 126 when mounted directly to the base portion 106. Alternatively, chip collector accessory 300 is mountable to the sub-base adapter 162 around the sub-base adapter hole (not shown).

The base portion 106 provides a stable and flat surface in a plane parallel with axis A-A (as shown in Figure 2). The base portion 106 is arranged to be positioned and secured against the workpiece during operation of the power tool 100. The base portion 106 may comprise a first base side 158 facing away from the workpiece, and a second base side 160 facing towards the workpiece. The base portion 106 may be formed from any suitable material such as metal, plastic, composite, or any combination thereof. The dimensions and geometrical features of the base portion 106 may be configured to ensure proper compatibility with a variety of accessories, as discussed below.

The base portion 106 may optionally comprise a plurality of mounting features, such as holes, slots, or recesses, which enable the secure attachment of other components such as a sub-base adapter 162. These mounting features may be arranged in a predetermined pattern or layout, which corresponds to complementary features on the sub-base adapter 162 for proper alignment and mounting.

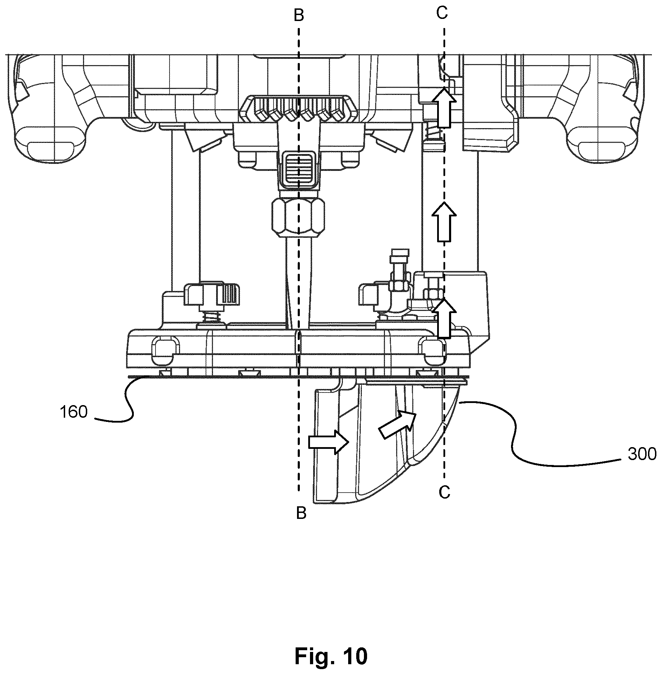

The base portion 106 of the power tool 100 may be integrally formed with the housing 102 or may be a separate component that is securely attached or connected to the main body of the housing 102 as shown in the accompanying Figures. Figure 10 shows the first guide post 108 and the second guide post 110 fixed with respect to the base portion 106. Figure 10 shows a close-up front view of the power tool 100.

The dust extraction conduit 136 is in fluid communication with the chip collector accessory 300, allowing for effective removal of chips from the cutting area. The chip collector accessory 300 is connected to the dust extraction conduit 136 via the first guide post conduit 138. In this way an airflow path is created by the vacuum source from the chip collector accessory 300 via the first guide post conduit 138 to the dust extraction conduit 136.

In some examples, the first guide post 108, the dust extraction conduit 136 and the at least part of the collector accessory 300 are all aligned along the longitudinal axis C-C of the first guide post 108. The longitudinal axis C-C of the first guide post 108 is also the longitudinal axis of the airflow pathway through the power tool 100. This means that the airflow from the collector accessory 300 is more efficient and more chips are entrained in the airflow from the vacuum source.

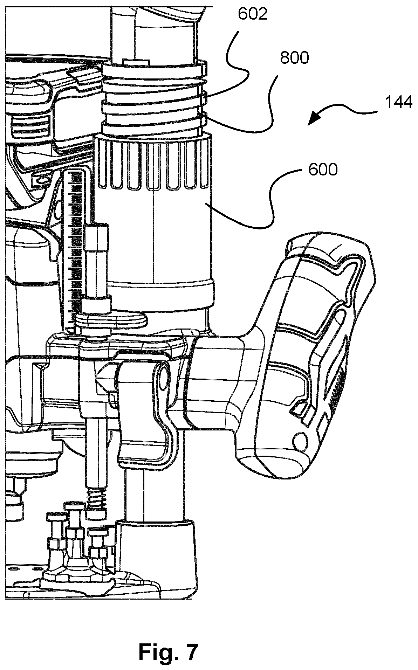

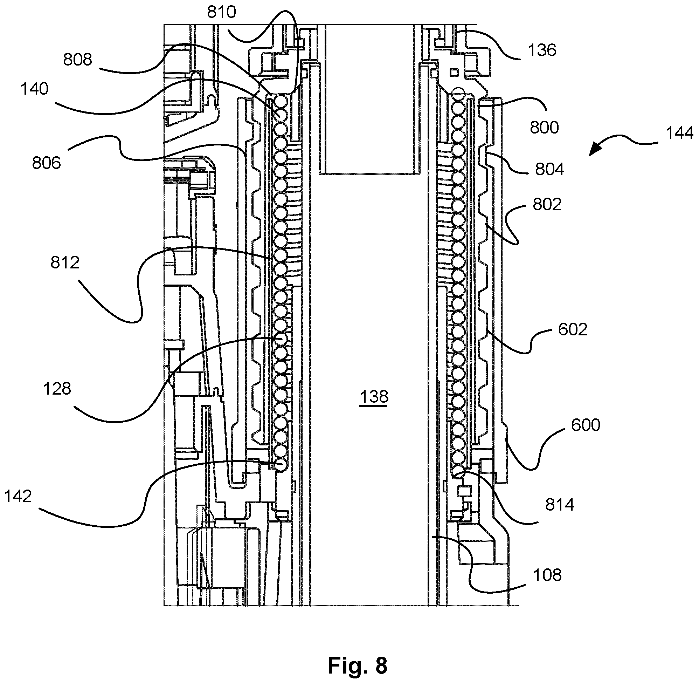

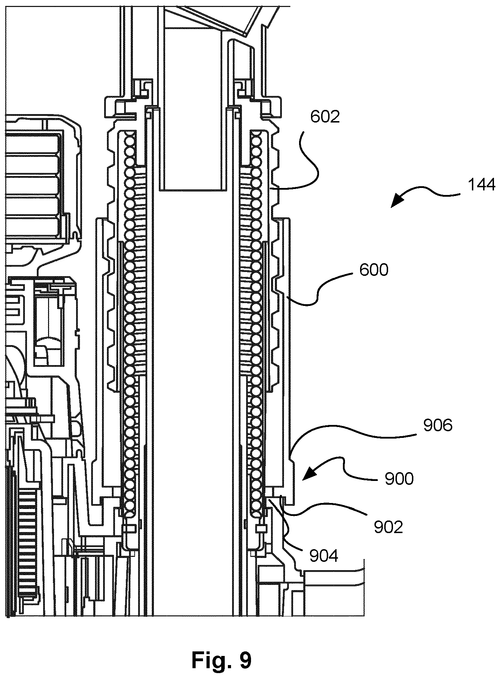

Turning to Figures 6, 7, 8, 9, the height adjustment mechanism 144 will be described in more detail. Figures 6 and 7 show a close-up view of the power tool 100 showing the height adjustment mechanism 144. Figures 8 and 9 show a cross-sectional view of part of the power tool 100 also showing the height adjustment mechanism 114.

As mentioned above, the power tool 100 is moveable between a retracted position and a plunged position. The housing 102 moves closer to the base portion 106 when the housing 102 moves into the plunged position. The height adjustment mechanism 144 is configured to adjust the position of the housing 102 with respect to the base portion 106 in the retracted position. That is, the height adjustment mechanism 144 changes the distance D of the housing 102 above the base portion 106. The distance D is best shown in Figure 4. The distance D is the distance between the housing 102 and the base portion 106 in a direction parallel with the longitudinal axis B-B of the power tool 100.

This means that the user can use the height adjustment mechanism 144 to reduce or extend the amount of travel the housing 102 needs to slide along the first and second guide posts 108, 110 when moving into the plunged position. This can be helpful when the user needs to make multiple plunge cuts in a workpiece.

Together with the height adjustment mechanism 114 and the plunge depth stop, both the position of the retracted position and the plunged position of the housing 102 can be adjusted. This allows the user greater versatility when using the power tool 100.

Figures 6 and 8 show the height adjustment mechanism 144 in a fully retracted position. In this position, the distance D when the housing 102 is in the retracted position is greatest. The height adjustment mechanism 144 comprises an adjustment sleeve 600 and a threaded sleeve 602. The adjustment sleeve 600 is threadedly engaged with the threaded sleeve 602 and is configured to rotate about the threaded sleeve 602. The adjustment sleeve 600 is tubular in shape and extends in a direction parallel with the longitudinal axis C-C of the first guide post 108. The threaded sleeve 602 is also tubular in shape and also extends in a direction parallel with the longitudinal axis C-C.

Accordingly, both the adjustment sleeve 600 and the threaded sleeve 602 are hollow and are configured to receive the first guide post 108. In some examples, the adjustment sleeve 600 and the threaded sleeve 602 are coaxial. In some examples, the adjustment sleeve 600 and the threaded sleeve 602 are coaxial with the first guide post 108. That is, the adjustment sleeve 600, the threaded sleeve 602, and the first guide post 108 are coaxial with the longitudinal axis C-C of the first guide post 108.

The adjustment sleeve 600 is configured to be gripped by the user and rotated. This means that the user can manually adjust the retracted position of the housing 102 by rotating the adjustment sleeve 600. The adjustment sleeve 600 is configured to rotate about the longitudinal axis C-C of the first guide post 108. In some examples, the adjustment sleeve 600 comprises ridges 604 configured to aid grip. Additionally or alternatively, the adjustment sleeve 600 comprises a surface to increase friction such as a silicone or rubberized surface. In some examples, the adjustment sleeve 600 can comprise a depth gauge (not shown) circumferentially provided around the adjustment sleeve 600. The depth gauge can aid the user to make precise fine adjustments to the height adjustment mechanism 144.

The threaded sleeve 602 is fixed with respect to the first guide post 108. In some examples, the threaded sleeve 602 is mounted to the dust extraction conduit 136. Accordingly, the threaded sleeve 602 does not move with respect to the dust extraction conduit 136. The threaded sleeve 602 comprises a helical thread 800 on the threaded sleeve outer surface 802. The adjustment sleeve 600 comprises a reciprocal helical thread 804 configured to threadedly engage the threaded sleeve 602. In some examples, the reciprocal helical thread 804 is mounted on an inner surface 806 of the adjustment sleeve 600. As shown in Figures 8 and 9, the reciprocal helical thread 804 extends partially around the inner surface 806. In other examples, the reciprocal helical thread 804 extends throughout the length of the inner surface 806 of the adjustment sleeve 600.

In some examples, the pitch of the helical thread 800 is shallow. This means that the several turns of the adjustment sleeve 600 are needed to move the adjustment sleeve 600 in a direction along the longitudinal axis C-C. By making the pitch of the helical thread 800 shallow, the height adjustment mechanism 144 is configured to provide fine adjustment of the distance D between the housing 102 and the base portion 106. In some examples, the pitch of the helical thread 800 is 10mm per revolution. In some examples the pitch can vary for example, the pitch can be 10mm per revolution if a metric dimension is required or 1/32" (0.79375 mm) per revolution or 1/16"( 1.5875 mm) per revolution if an imperial dimension is required.

Since the adjustment sleeve 600 is circumferentially mounted to the threaded sleeve 602 and the first guide post 108, the radius of the adjustment sleeve 600 can be increased. In some examples, the adjustment sleeve 600 comprises an ergonomic size such that the adjustment sleeve 600 is greppable in the palm of a user's hand. This means that the mechanical advantage of the adjustment sleeve 600 can be increased, making it easier for the user to manipulate the adjustment sleeve 600. In other words, the size of the adjustment sleeve 600 helps fine adjustment of the height adjustment mechanism 144.

When the user rotates the adjustment sleeve 600 with respect to the threaded sleeve 602, the reciprocal helical thread 804 threadedly engages the threaded sleeve 602 in the helical thread 800. The adjustment sleeve 600 then moves in a direction along the longitudinal axis C-C of the first guide post 108. Figures 7 and 9 show the height adjustment mechanism 144 in an extended position whereby the adjustment sleeve 600 has moved in a direction along the longitudinal axis C-C.

As shown in Figure 8 and 9 the housing return spring 128 is mounted between the first guide post 108 and the threaded sleeve 602. This ensures a compact arrangement of the height adjustment mechanism 144, the biasing mechanism of the housing 102 and the dust extraction of the power tool 100.

The housing return spring 128 is fixed to the threaded sleeve 602 at the first spring end 140. The first spring end 140 of the housing return spring 128 is trapped in an annular recess 808 defined by an inner annular wall 810 and an outer wall 812 of the threaded sleeve 602. The second spring end 142 is fixed in an annular recess in the housing 102. Accordingly, when the housing 102 moves with respect to the threaded sleeve 602 e.g., when the housing 102 moves into the plunged position, then housing return spring 128 extends and urges the housing 102 back to the retracted position.

The adjustment sleeve 600 comprises a housing stop portion 900 (best shown in Figure 9). The housing stop portion 900 is configured to engage the housing 102 when the housing 102 is in the retracted position. In this way, the position of housing stop portion 900 determines the position of the retracted position for the housing 102.

When the housing 102 moves into the plunged position, the housing 102 does not engage the housing stop portion 900 of the adjustment sleeve 600.

The housing stop portion 900 comprises a recessed lip 902 at an end 906 of the adjustment sleeve 600 closest to the housing 102. The recessed lip 902 is configured to engage a reciprocal projection 904 mounted on the housing 102. When the housing 102 is in the retracted position, the recessed lip 902 is in engagement with the reciprocal projection 904.

In another example, two or more examples are combined. Features of one example can be combined with features of other examples.

Examples of the present disclosure have been discussed with particular reference to the examples illustrated. However, it will be appreciated that variations and modifications may be made to the examples described within the scope of the disclosure.

## Claims

1. A power tool (100) comprising:
a housing (102);
a motor (120) mounted in the housing (102) and operatively connected to a tool holder arranged to hold a cutting tool bit;
at least one guide post (108) slidably mounted to the housing (102) such that the housing (102) is moveable between a retracted position and a plunged position;
a base portion (106) fixed to the at least one guide post (108);
a height adjustment mechanism (114) comprising a threaded sleeve (602) fixed with respect to one of the at least one guide post (108) or the housing (102) and an adjustment sleeve (600) threadedly engaged with the threaded sleeve (602) wherein the adjustment sleeve (600) comprises a housing stop portion (900) configured to engage the other of the housing (102) or the at least one guide post (108) in the retracted position;
wherein movement of the adjustment sleeve (600) with respect to the threaded sleeve (602) is configured to adjust the distance between the housing (102) and the base portion (106) when the housing (102) is in the retracted position.

2. The power tool (100) according to claim 1 wherein the power tool (100) comprises a housing return spring (128) configured to bias the housing (102) towards the retracted position.

3. The power tool (100) according to claim 2 wherein a first spring end (140) of the housing return spring (128) is fixed with respect to the threaded sleeve (602) and a second spring end (142) of the housing return spring (128) is fixed with respect to the housing (102).

4. The power tool (100) according to claim 3 wherein the housing return spring (128) is mounted between the threaded sleeve (602) and the at least one guide post (108).

5. The power tool (100) according to claim 4 wherein the first spring end (140) is mounted between a protruding inner annular wall (810) and an outer wall (812) of the threaded sleeve (602).

6. The power tool (100) according to any of claims 3 to 5 wherein the second spring end (142) is mounted in an annular recess (808) in the housing (102).

7. The power tool (100) according to any of the preceding claims wherein the guide post comprises a guide post conduit (138) and is in fluid communication with a dust extraction conduit (136).

8. The power tool (100) according to claim 7 wherein the threaded sleeve (602) is mounted to the dust extraction conduit (136).

9. The power tool (100) according to any of the preceding claims wherein the at least one guide post (108), the threaded sleeve (602) and the adjustment sleeve (600) are coaxially aligned.

10. The power tool (100) according to any of the preceding claims wherein the adjustment sleeve (600) comprises a depth gauge.

11. The power tool (100) according to any of the preceding claims wherein the router comprises a plunge depth stop mounted to the base and a plunge depth rod (152) mounted to the housing (102) wherein the plunge depth stop and the plunge depth rod (152) are configured to engage each other when the housing (102) is in the plunge position.

12. The power tool (100) according to claim 11 wherein the plunge depth stop and / or the plunge depth rod (152) are configured to be adjustable and adjust the distance between the housing (102) and the base when the housing (102) is in the plunge position.

13. The power tool (100) according to any of the preceding claims wherein the housing stop portion (900) comprises a recessed lip (902) at an end (906) of the adjustment sleeve (600).

14. The power tool (100) according to claim 13 wherein the recessed lip (902) is configured to engage a reciprocal projection (904) mounted on the housing (102).

15. The power tool (100) according to any of the preceding claims wherein the power tool (100) is a router, a plunge router, a plunge saw, a drill, a multitool, or an oscillating tool.
